# EUROPEAN PATENT APPLICATION

(11) **EP 2 098 443 A1**
(43) Date of publication of application: **09.09.2009**
(21) Application number: 09250591.6
(22) Date of filing: 02.03.2009
(51) Int. Cl.: B62J 35/00, B62J 37/00

(54) **Straddle type vehicle**

(30) Priority: 07.03.2008 JP 2008058696
(71) Applicant: Yamaha Hatsudoki Kabushiki Kaisha, Iwata-shi, Shizuoka-ken 438-8501 (JP)
(72) Inventor: Kaneko, Kyohei, Iwata-shi, Shizuoka-ken 438-8501 (JP); Okada, Takeshi, Iwata-shi, Shizuoka-ken 438-8501 (JP)
(74) Representative: Harris, Ian Richard

(57) **Abstract**

A straddle type vehicle is capable of preventing the stain on vehicle components due to adhesion of fluid such as fuel overflowed from a filler opening and rain water. In a motorcycle 10, a guide member 100 includes a holding portion 110 and a fluid guide portion 150. The holding portion 110 holds a tank flange 52 formed on a fuel tank 50. The fluid guide portion 150 extends from the holding portion 110 and guides the fuel in a desired direction. The holding portion 110 and the fluid guide portion 150 are formed along the longitudinal direction of the tank flange 52.

## Description

### Technical Field

The present invention relates to a straddle type vehicle having a guide member for guiding fluid running down a surface of a vehicle component mounted on the vehicle.

### Background Art

Conventionally, in a straddle type vehicle such as a motorcycle, in order to prevent the stain on various vehicle components mounted on the straddle type vehicle due to adhesion of fuel overflowed from a filler opening of a fuel tank, a method of providing a guide member for guiding the fuel overflowed from the filler opening in a desired direction is known (for example, see JP-A-Hei 6-191456 (Page 2 and FIGs. 2 and 3)).

Specifically, a fuel tank which is provided above an engine includes a flange-like guide member on its outer bottom end in the width direction of the vehicle. Fluid such as fuel overflowed from a filler opening and rain water runs down an upper surface of the flange-like guide member from a surface of the fuel tank and drops on the ground from an outer end of the guide member in the width direction of the vehicle. This guide member prevents the stain on vehicle components such as the engine disposed below the fuel tank and a vehicle frame due to adhesion of fuel overflowed from the filler opening.

However, the above-described conventional guide member has the following problems. That is, when fluid such as fuel dropped downward from an outer end of the guide member in the width direction of the vehicle is blown by strong winds, the fluid fails to drop on the ground and adheres to the vehicle components such as the engine and the vehicle frame.

Moreover, since the above-described conventional guide member is adhered to the outer bottom end of the fuel tank in the width direction of the vehicle, there is another problem that attachment and detachment operation of the guide member is troublesome.

The present invention seeks to provide a straddle type vehicle capable of preventing the stain on vehicle components due to adhesion of fluid such as fuel overflowed from a filler opening and rain water easily and reliably.

### Summary

An aspect of the present invention is directed to a straddle type vehicle (e.g., a motorcycle 10) having a guide member (e.g., a guide member 100) for guiding fluid (fuel) running down a surface of a vehicle component (e.g., a fuel tank 50) in a desired direction, in which the guide member includes:
a holding portion (e.g., a holding portion 110) for holding a plate-like edge portion (e.g., a tank flange 52) formed on the vehicle component; and
a fluid guide portion (e.g., a fluid guide portion 150) extending from the holding portion for guiding the fluid,
the holding portion and the fluid guide portion are formed along the longitudinal direction of the edge portion, and
the fliud guide portion includes:
a fluid passage portion (e.g., a fluid passage portion 160) including a plane portion extending in a direction (e.g., a D1 direction) away from the edge portion; and
a fluid stop portion (e.g., a fluid stop portion 170) which continues from the fluid passage portion and is bent with respect to the plane portion, and
the fluid stop portion extends in a direction different from a direction (e.g., a D2 direction) that the fluid runs down.

In this straddle type vehicle, fluid running down the surface of the vehicle component flows into the plane portion of the fluid passage portion. The fluid is stopped without overflowing from the fluid passage portion by the fluid stop portion which continues from the fluid passage portion and is bent with respect to the plane portion. Thereafter, guided by the fluid passage portion, the fluid flows along the plate-like edge portion formed on the vehicle component.

An embodiment of this aspect of the present invention can prevent the fluid from dropping downward from the outer end of the guide member in the width direction of the vehicle compared to the conventional guide member. This reliably prevents the case that, for example, when fluid such as fuel overflowed from the filler opening and rain water is blown by strong winds, the fluid fails to drop on the ground and adheres to the vehicle components such as the engine and the vehicle frame.

Also, with an embodiment of this aspect of the present invention, since the guide member holds the plate-like edge portion of the vehicle component, attachment and detachment of the guide member is executed easily and reliably compared to sticking to the edge portion and the like.

In an embodiment of the present invention, the fluid stop portion can be provided on an end opposite to an end of the fluid passage portion positioned on the side of the holding portion.

In an embodiment of the present invention, the fluid guide portion can include a folded portion (e.g., folded portion 180) that extends in a direction of the edge portion from the fluid stop portion.

In an embodiment of the present invention, the holding portion can include:
a pair of side wall portions (side wall portion 120) that abut to respective surfaces of the plate-like edge portion; and
a bottom portion (bottom portion 130) which continues from respective ends of the pair of side wall portions, and
the fluid guide portion extends from at least one of the side wall portions.

In an embodiment of the present invention, the fluid guide portion can extend from a middle portion (middle portion 120a) of the side wall portion.

In an embodiment of the present invention, a cross section of the holding portion along the longitudinal direction can be concave, and
the holding portion can include:
a flexible core member (e.g., core member 141) made of metal; and
an elastic member (e.g., rubber covering 142) that covers the core member.

In an embodiment of the present invention, the holding portion can include:
a pair of side wall portions (e.g., side wall portion 120) that abut to respective surfaces of the plate-like edge portion; and
a bottom portion (e.g., bottom portion 130) which continues from respective ends of the pair of side wall portions,
an inner wall surface (e.g., inner wall surface 121) of the side wall portions includes a corrugated portion (e.g., corrugated portion 122) that protrudes from the inner wall surface to a space through which the edge portion is inserted,
the corrugated portion is inclined in an inserting direction (e.g., D3 direction) of the edge portion into the holding portion, and
a tip (e.g., tip 122a) of the corrugated portion is positioned closer to the bottom portion than its base portion (e.g., a base portion 122b).

In an embodiment of the present invention, there can be provided a fuel tank (fuel tank 50) for storing fuel supplied to an engine that generates driving force of the straddle type vehicle,
the fuel tank includes the edge portion, and
the guide member is mounted on the edge portion formed on the fuel tank.

With an embodiment of the present invention, it is possible to provide a straddle type vehicle capable of preventing the stain on vehicle components due to adhesion of fluid such as fuel overflowed from a filler opening and rain water easily and reliably.

### Brief Description of the Drawings

Embodiments f the invention are described hereinafter, by way of example only, with reference to the accompanying drawings.
FIG. 1 is a left side view of a motorcycle which is a straddle type vehicle according to an embodiment of the present invention.
FIG. 2 is a front view of the motorcycle which is the straddle type vehicle according to the embodiment of the present invention.
FIG. 3 is an exploded perspective view showing the surroundings of a fuel tank of the motorcycle which is the straddle type vehicle according to the embodiment of the present invention.
FIG. 4 is a cross sectional view taken along the line A-A of FIG. 3.
FIG. 5 is a cross sectional view of a guide member of the motorcycle which is the straddle type vehicle according to the embodiment of the present invention.
FIG. 6 is a cross sectional view of the guide member shown as a first variation of the present invention.
FIG. 7 is a cross sectional view of the guide member shown as a second variation of the present invention.

### Detailed Description

An embodiment of a straddle type vehicle according to the present invention will be described with reference to drawings. More specifically, the following will be described: (1) overall schematic configuration, (2) configuration of the surroundings of a fuel tank, (3) attachment configuration of a guide member to a tank flange, (4) configuration of the guide member, (5) operation and effects, (6) variation of the guide member, and (7) other.

In the following description of the drawings, identical or similar parts are denoted with the identical or similar reference numerals. However, it should be noted that the drawings are schematic and that each dimensional ratio may be varied from the actual dimensions.

Thus, specific dimensions and the like should be determined with reference to the following description. Moreover, it is understood that these drawings may include parts having the different dimensional relationship or dimensional ratio to each other.

### (1) Overall Schematic Configuration

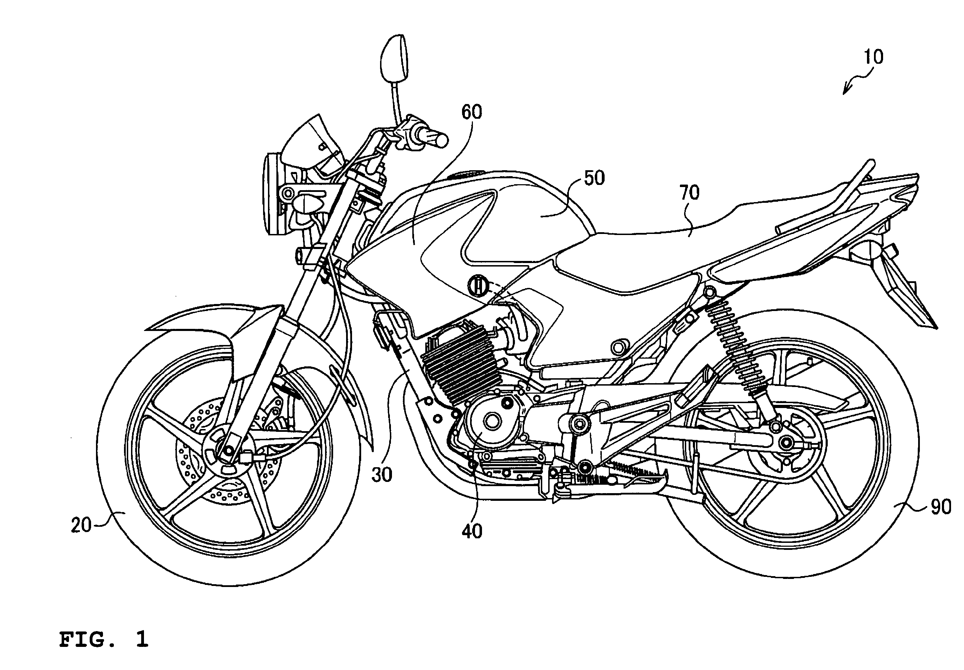

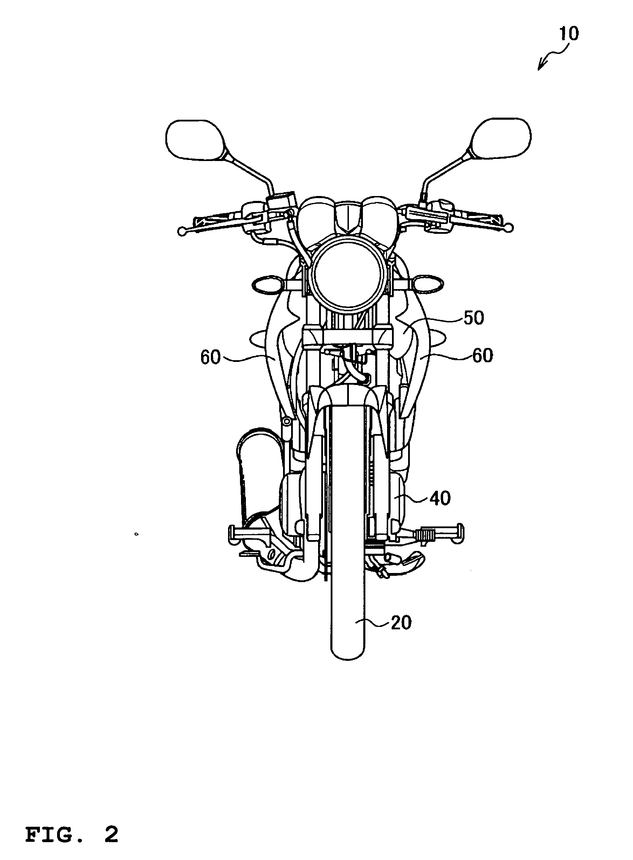

An overall schematic configuration of a motorcycle 10 which is a straddle type vehicle according to the embodiment will be described first. FIG. 1 is a left side view of the motorcycle 10. FIG. 2 is a front view of the motorcycle 10.

As shown in FIGs. 1 and 2, the motorcycle 10 includes a vehicle frame 30 that forms a framework of the motorcycle 10. The motorcycle 10 has a front wheel 20, a fuel tank 50, an engine 40, a seat 70, and a rear wheel 90. The fuel tank 50, the engine 40, and the seat 70 are mounted on the vehicle frame 30.

The front wheel 20 is rotatably supported by a pair of front forks 21 connected to the vehicle frame 30.

The engine 40 is a power unit that generates driving force of the motorcycle 10. The engine 40 is mounted on the vehicle frame 30 at a substantially middle portion of the motorcycle 10 in the forward and rearward direction. The engine 40 generates driving force transmitted to the rear wheel 90. The driving force generated in the engine 40 is transmitted to the rear wheel 90 through a chain.

The seat 70 is disposed at the rear of the fuel tank 50. A rider is seated on the seat 70.

The fuel tank 50 stores fuel supplied to the engine 40. The fuel tank 50 is disposed above the engine 40. The fuel tank 50 is disposed in front of the seat 70.

A vehicle cover (hereinafter, referred to as a "shroud") 60 is disposed on both side portions of the fuel tank 50. The shroud 60 extends below the fuel tank 50.

### (2) Configuration of the Surroundings of the Fuel Tank 50

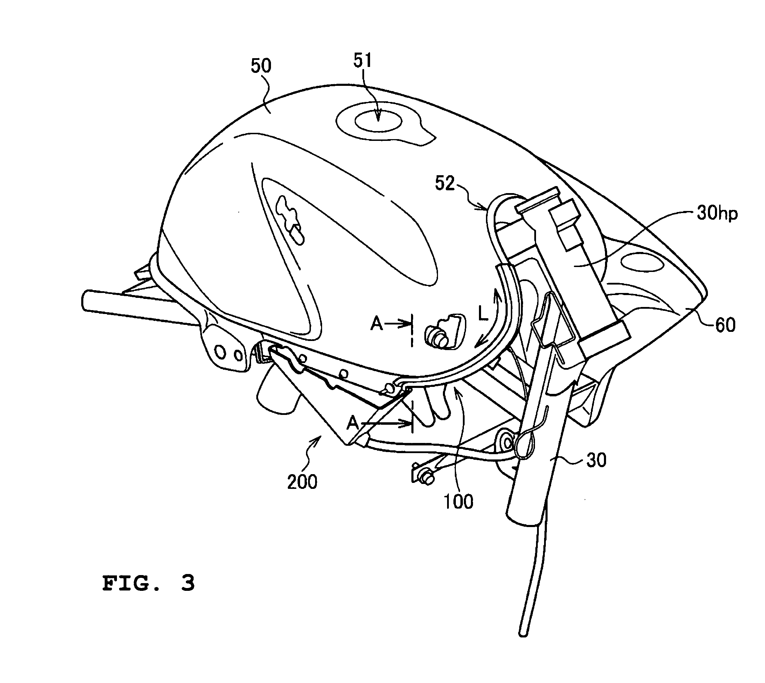

FIG. 3 is an exploded perspective view of the motorcycle 10 illustrating the configuration of the surroundings of the fuel tank 50. As shown in FIG. 3, the vehicle frame 30 has a steering head pipe 30hp. The fuel tank 50 is mounted to the vehicle frame 30 at a portion adjacent to the steering head pipe 30hp.

The fuel tank 50 is formed by a plurality of metal plates to which bending work is performed. The fuel tank 50 has a filler opening 51. The filler opening 51 is formed to be substantially horizontal on an upper surface of the fuel tank 50.

A tank flange 52 is formed at a joint portion of the metal plates. In the embodiment, the tank flange 52 constitutes a plate-like edge portion.

The motorcycle includes a guide member 100 and a fuel catcher 200. The guide member 100 is mounted to the tank flange 52. The guide member 100 guides fluid that runs down a surface of the fuel tank 50, for example, fuel overflowed from the filler opening 51, in a desired direction.

The guide member 100 is mounted from a portion adjacent to the steering head pipe 30hp of the tank flange 52 along the longitudinal direction of the tank flange 52 (the L direction in FIG. 3). The guide member 100 extends to the fuel catcher 200.

The fuel catcher 200 receives fuel that runs down the surface of the fuel tank 50. Moreover, the fuel catcher receives fuel guided by the guide member 100.

The fuel catcher 200 is attached to an inner side of the shroud 60 and a lower surface of the fuel tank 50. In a right side view of the motorcycle 10, the fuel catcher 200 is disposed below the filler opening 51 of the fuel tank 50. In other words, the fuel catcher 200 is covered with the shroud 60 in a side view of the motorcycle 10.

### (3) Attachment Configuration of the Guide Member 100 to the Tank Flange 52

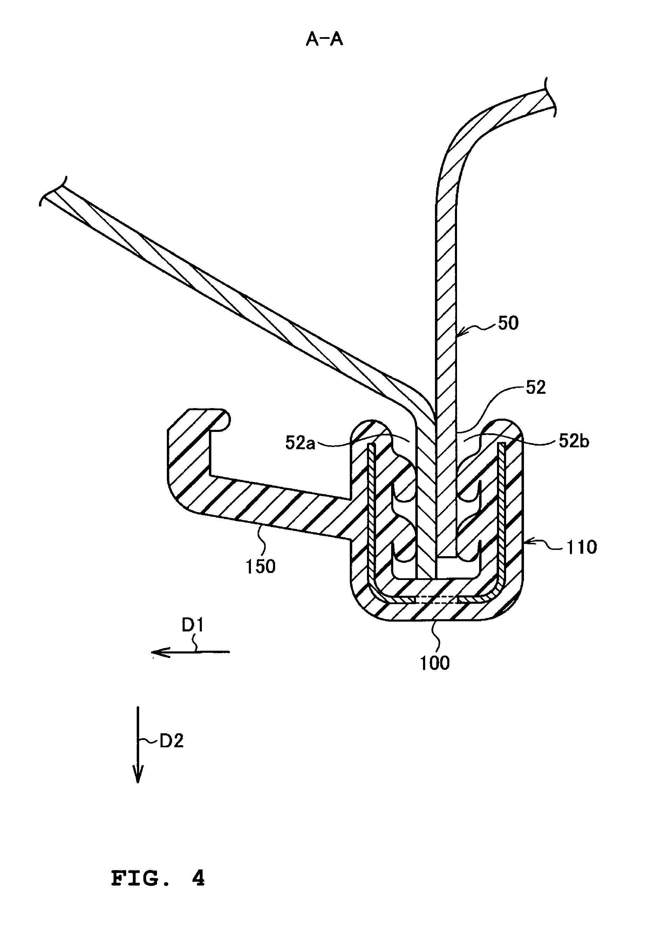

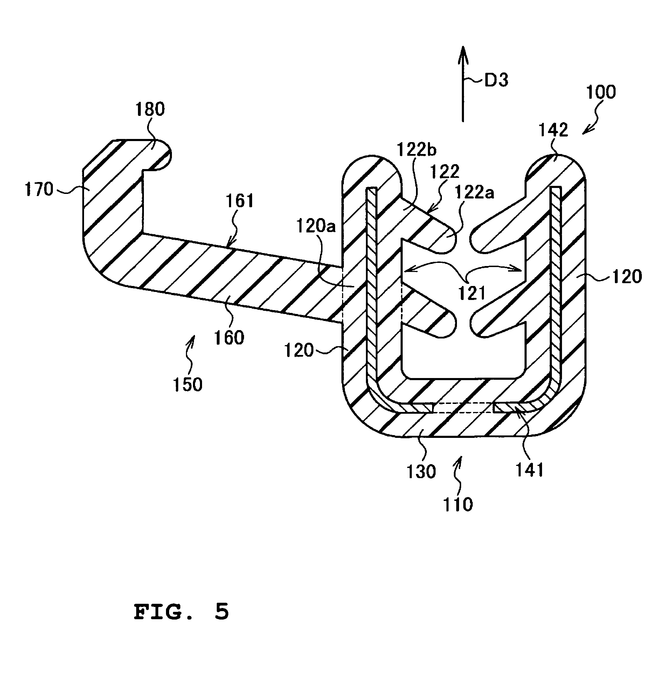

With reference to FIGs. 4 and 5, the configuration of the guide member 100 will be described. FIG. 4 is a cross sectional view taken along the line A-A of FIG. 3. FIG. 5 is a cross sectional view of the guide member 100.

As shown in FIG. 4, the guide member 100 includes a holding portion 110 and a fluid guide portion 150. The holding portion 110 holds the tank flange 52 formed on the fuel tank 50. The fluid guide portion 150 extends from the holding portion 110 and guides the fuel in a desired direction.

The holding portion 110 and the fluid guide portion 150 are formed along the longitudinal direction of the tank flange 52 (the L direction in FIG. 3).

### (4) Configuration of the Guide Member 100

As shown in FIG. 5, the fluid guide portion 150 includes a fluid passage portion 160 and a fluid stop portion 170. The fluid passage portion 160 includes a plane portion 161 extending in a direction away from the tank flange 52 (the D1 direction). The plane portion 161 faces the inserting direction D3 of the tank flange 52 into the holding portion 110.

The fluid stop portion 170 is provided on an end opposite to an end of the fluid passage portion 160 positioned on the side of the holding portion 110.

The fluid stop portion 170 continues from the fluid passage portion 160 and is bent with respect to the plane portion 161. The fluid stop portion 170 extends in a direction different from a direction that the fluid runs down (the D2 direction).

The fluid guide portion 150 includes a folded portion 180 that extends in a direction of the tank flange 52 from the fluid stop portion 170.

The holding portion 110 includes side wall portions 120 and a bottom portion 130. The side wall portions 120 abut to surfaces 52a and 52b of the tank flange 52. The bottom portion 130 continues from respective ends of the side wall portions 120.

Accordingly, the fluid guide portion 150 extends from at least one of the side wall portions 120. The fluid guide portion 150 extends from a middle portion 120a of the side wall portion 120.

The holding portion 110 includes a core member 141 and a rubber covering 142. The core member 141 is made of elastic metal. The rubber covering 142 covers the core member 141. In this embodiment, the rubber covering 142 constitutes an elastic member. Moreover, a cross section of the holding portion 110 along the longitudinal direction of the tank flange 52 is concave.

An inner wall surface 121 of the side wall portion 120 includes a corrugated portion 122 that protrudes from the inner wall surface 121 to a space through which the tank flange 52 is inserted.

The corrugated portion 122 is inclined in the inserting direction D3 of the tank flange 52 into the holding portion 110. A tip 122a of the corrugated portion 122 is positioned closer to the bottom portion 130 than a base portion 122b of the corrugated portion 122.

### (5) Operation and Effects

In the motorcycle 10, the fluid running down the surface of the fuel tank 50 flows into the plane portion 161 of the fluid passage portion 160. The fluid is stopped without overflowing from the fluid passage portion 160 by the fluid stop portion 170 which continues from the fluid passage portion 160 and is bent with respect to the plane portion 161. Thereafter, guided by the fluid passage portion 160, the fluid flows along the longitudinal direction of the tank flange 52.

Thus, the motorcycle 10 can prevent the fluid from dropping downward from the outer end of the guide member in the width direction of the vehicle compared to the conventional guide member. This reliably prevents the case that, for example, when fluid is blown by strong winds, the fluid fails to drop on the ground and adheres to the vehicle components such as the engine and the vehicle frame.

Also, in the motorcycle 10, since the guide member 100 is attached by holding the plate-like edge portion of the vehicle component, attachment and detachment operation of the guide member 100 is executed easily and reliably compared to sticking to the edge portion.

In the motorcycle 10, the fluid stop portion 170 is provided on an end opposite to an end of the fluid passage portion 160 positioned on the side of the holding portion 110.

Thus, this motorcycle 10 can prevent the fluid overflow from the fluid passage portion 160 while securing a fluid passage area by the fluid stop portion 170.

In the motorcycle 10, the fluid guide portion 150 includes the folded portion 180 that extends in a direction of the tank flange 52 from the fluid stop portion 170.

Thus, this motorcycle 10 can prevent the fluid overflow from the fluid passage portion 160 and the fluid stop portion 170 by the folded portion 180.

In the motorcycle 10, the fluid guide portion 150 extends from the middle portion 120a of the side wall portion 120. This increases the capacity of a fluid flow passage formed from the holding portion 110, the fluid passage portion 160, and the fluid stop portion 170.

Thus, the motorcycle 10 reliably retains the fluid running down the surface of the fuel tank 50 in the fluid passage portion 160.

In the motorcycle 10, a cross section of the holding portion 110 is concave, and the holding portion 110 includes the flexible metal core member 141 and the rubber covering 142 that covers the core member 141.

This allows the holding portion 110 to hold the tank flange 52 firmly.

Moreover, the holding portion 110 includes the flexible metal core member 141 in an inner portion of the rubber covering 142 as the elastic member. This allows the holding portion 110 to be flexibile along the extending direction of the tank flange 52 and to hold reliably.

According to the motorcycle 10, the inner wall surface 121 of the side wall portion 120 has a corrugated portion 122. Since the corrugated portion 122 is formed on the inner wall surface 121 of the side wall portion 122, the holding portion 110 can hold the tank flange 52 reliably.

Moreover, the corrugated portion 122 is inclined with respect to the inserting direction (the D3 direction) of the tank flange 52 into the holding portion 110. In addition, the tip 122a of the corrugated portion 122 is positioned closer to the bottom portion 130 than the base portion 122b of the corrugated portion 122.

Thus, the corrugated portion 122 prevents the come-out of the holding portion 110 in the opposite direction from the inserting direction (the D3 direction), that is, in the pull-out direction. As a result, the holding portion 110 can hold the tank flange 52 reliably.

In the motorcycle 10, since the guide member 100 is provided on the tank flange 52 of the fuel tank 50, even when the fuel overflows from the filler opening 51 in fueling, the fuel running down the surface of the fuel tank 50 can be guided to the fuel catcher 200 along the rank flange 52.

Thus, the motorcycle 10 can prevent the stain on the vehicle components due to adhesion of the fluid such as fuel overflowed from the filler opening 51 and rain water easily and reliably.

### (6) Variation of the Guide Member

In the guide member 100, the fluid passage portion 160 may extend from either the side wall portions 120 or the bottom portion 130 of the holding portion 110.

The fluid passage portion 160 may be designated to have the direction of the plane portion 161 of the fluid guide portion 150 appropriately in accordance with the positional relationship between the tank flange 52 of the fuel tank 50 and the surface of the fuel tank 50 that the fluid runs down.

### 6.1 First Variation of the Guide Member

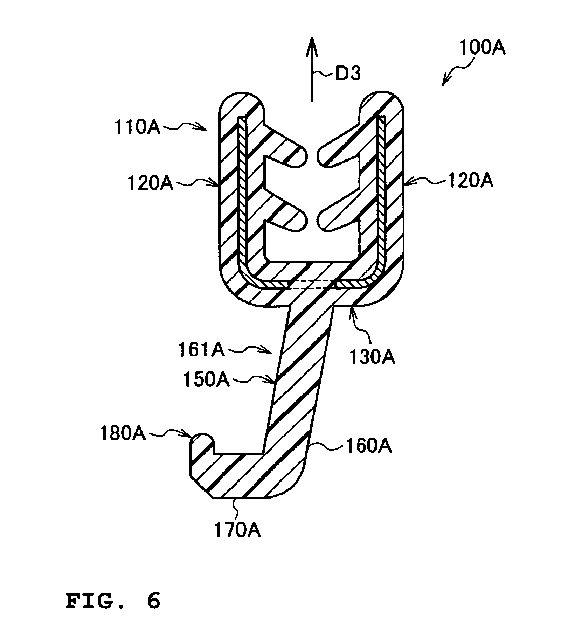

FIG. 6 is a cross sectional view of a guide member 100A shown as a first variation of the guide member. As shown in FIG. 6, the guide member 100A has a holding portion 110A that holds the tank flange 52 formed on the fuel tank 50, and a fluid guide portion 150A that extends from the holding portion 110A and guides the fluid in a desired direction.

The fluid guide portion 150A has a fluid passage portion 160A and a fluid stop portion 170A. The fluid passage portion 160A includes a plane portion 161A that extends in a direction away from the tank flange 52 (In FIG. 6, the same direction as the D3 direction).

The fluid stop portion 170A is provided on an end opposite to an end of the fluid passage portion 160A positioned on the side of the holding portion 110A. Moreover, the fluid stop portion 170A continues from the fluid passage portion 160A and is bent with respect to the plane portion 161A.

The fluid guide portion 150A has a folded portion 180A that extends in a direction of the tank flange 52 from the fluid stop portion 170A.

### 6.2 Second Variation of the Guide Member

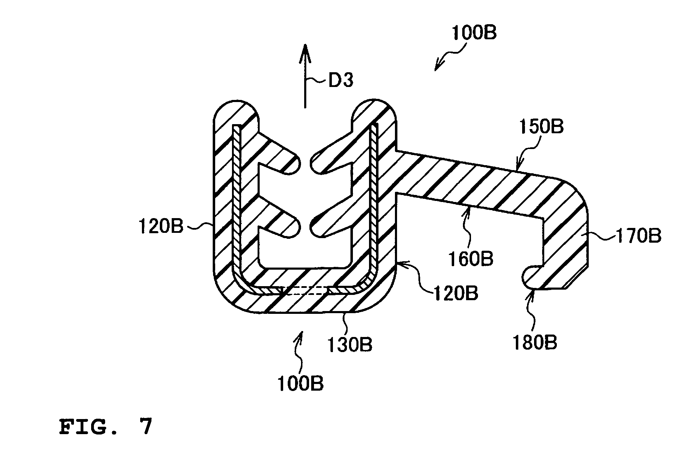

FIG. 7 is a cross sectional view of a guide member 100B shown as a second variation of the guide member. As shown in FIG. 7, the guide member 100B has a holding portion 110B that holds the tank flange 52 formed on the fuel tank 50, and a fluid guide portion 150B that extends from the holding portion 110B and guides the fluid in a desired direction.

The fluid guide portion 150B has a fluid passage portion 160B and a fluid stop portion 170B. The fluid passage portion 160B includes a plane portion 161B that extends in a direction away from the tank flange 52.

In the second variation, the plane portion 161B faces the direction opposite to the inserting direction (the D3 direction) of the tank flange 52 into the holding portion 110B.

The fluid stop portion 170B is provided on an end opposite to an end of the fluid passage portion 160B positioned on the side of the holding portion 110B. Moreover, the fluid stop portion 170B continues from the fluid passage portion 160B and is bent with respect to the plane portion 161B.

The fluid guide portion 150B has a folded portion 180B that extends in a direction of the tank flange 52 from the fluid stop portion 170B.

According to the motorcycle 10 of the first and second variation, the holding portion 110 includes the pair of side wall portions 120 that abut to the surfaces 52a and 52b of the tank flange 52, and the bottom portion 130 that continues from respective ends of the side wall portions 120. Moreover, the fluid guide portion 150 extends from at least one of the side wall portions 120.

In other words, the direction of the plane portion 161 of the fluid passage portion 160 may be designated appropriately in accordance with the positional relationship between the tank flange 52 of the fuel tank 50 and the surface of the fuel tank 50 that the fluid runs down.

Thus, the motorcycle 10 reliably retains the fluid running down the surface of the vehicle components in accordance with the positional relationship between the surface of vehicle components such as the fuel tank 50 and the plate-like edge portion.

### (7) Other Embodiments

As described above, the detail of the present invention is disclosed through one embodiment thereof. However, it should not be understood that the present invention is not limited to the statement and drawings which are part of this disclosure. Various alternative embodiments are apparent to those skilled in the art from this disclosure.

In the above embodiment, the motorcycle 10 is described as an example of the straddle type vehicle. However, the number of wheels is not limited to two as long as they are used in a straddle type vehicle. For example, the number of wheels may be three or four.

In the above embodiment, the mounting position of the fuel catcher 200 to the fuel tank 50 is not limited to the position shown in FIG. 3. The fuel catcher 200 may be mounted on the right side or both ends of the motorcycle 10.

In the above embodiment, the fluid stop portion 170 is provided on an end opposite to an end of the fluid passage portion 160 positioned on the side of the holding portion 110. However, the fluid stop portion 170 is not necessarily provided.

Moreover, the fluid guide portion 150 has the folded portion 180 that extends in the direction of the tank flange 52 from the fluid stop portion 170. However, the folded portion 180 is not necessarily provided.

Moreover, the fluid guide portion 150 extends from the middle portion 120a of the side wall portion 120. However, the position on which the fluid guide portion 150 is formed is not limited to the middle portion 120a of the side wall portion 120. For example, the fluid guide portion may be formed on a connecting position between the side wall portions 120 and the bottom portion 130.

In the above embodiment, the cross section of the holding portion 110 along the longitudinal direction of the tank flange 52 is concave. However, the cross section is not limited to concave as long as the holding portion 110 has a configuration capable of holding the tank flange 52. For example, the bottom portion 130 that continues from the ends of the pair of side wall portions 120 may be curved, that is, the cross section may be U-shaped.

Moreover, the core member 140 included in the holding portion 110 is not limited to metal. For example, the core member 141 may be made of resin having a larger hardness than the elastic member that covers the core member 141. Moreover, the holding portion 110 may not contain metal. In such a case, the overall holding portion 110 may have the same holding force as in the case that metal is used by increasing the hardness of the rubber covering 142 which is the elastic member.

In the above embodiment, the inner wall surface 121 of the side wall portion 120 includes the corrugated portion 122 that protrudes from the inner wall surface 121 to the space through which the tank flange 52 is inserted, and the corrugated portion 122 is inclined with respect to the inserting direction of the tank flange 52 into the holding portion 110. However, the corrugated portion 122 is not necessarily inclined with respect to the inserting direction of the tank flange 52 into the holding portion 110. The corrugated portion 122 may be formed to extend in the direction perpendicular to the inner wall surface 121.

Moreover, the tip 122a of the corrugated portion 122 is described to be positioned closer to the bottom portion 130 than the base portion 122b of the corrugated portion 122. However, the tip 122a of the corrugated portion 122 is not necessarily positioned closer to the bottom portion 130 than the base portion 122b of the corrugated portion 122.

The above embodiment describes, the guide member that is mounted on the edge portion of the fuel tank that stores fuel supplied to the engine that generates driving force of the motorcycle 10. However, the mounting portion is not limited to the edge portion of the fuel tank. For example, the guide member may be mounted on an edge portion of the shroud, the vehicle cover, and the like.

The above embodiment describes such that the fuel catcher 200 receives the fuel that runs down the fuel tank 50. However, the fuel catcher 200 can receive rain water and muddy water for example, as long as it runs down the surface of the fuel tank 50.

As described above, it is understood that the present invention includes various embodiments etc. which are not described herein. Accordingly, the technical scope of the invention is determined only from novel features concerning claims which are appropriate from the above description.

### Description of Reference Numerals and Symbols

10: motorcycle
60: shroud
20: front wheel
50: fuel tank
51: filler opening
52: tank flange
52a, 52b: surface
40: engine
30: vehicle frame
30hp: steering head pipe
70: seat
90: rear wheel
100: guide member
110: holding portion
120: side wall portion
120a: middle portion
121: inner wall surface
122: corrugated portion
122a: tip
122b: base portion
130: bottom portion
141: core member
142: rubber covering
150: fluid guide portion
160: fluid passage portion
161: plane portion
170: fluid stop portion
180: folded portion
200: fuel catcher
D1: direction
D2: direction

## Claims

1. A straddle type vehicle having a guide member for guiding fluid running down a surface of a vehicle component in a desired direction, wherein the guide member comprises:
a holding portion for holding a plate-like edge portion formed on the vehicle component; and
a fluid guide portion extending from the holding portion for guiding the fluid,
the holding portion and the fluid guide portion are formed along the longitudinal direction of the edge portion, and
the fliud guide portion comprises:
a fluid passage portion including a plane portion extending in a direction away from the edge portion; and
a fluid stop portion which continues from the fluid passage portion and is bent with respect to the plane portion, and
the fluid stop portion extends in a direction different from a direction that the fluid runs down.

2. The straddle type vehicle according to Claim 1,
wherein the fluid stop portion is provided on an end opposite to an end of the fluid passage portion positioned on the side of the holding portion.

3. The straddle type vehicle according to Claim 1 or Claim 2,
wherein the fluid guide portion includes a folded portion that extends in a direction of the edge portion from the fluid stop portion.

4. The straddle type vehicle according to any one of the preceding Claims,
wherein the holding portion includes:
a pair of side wall portions that abut to respective surfaces of the plate-like edge portion; and
a bottom portion which continues from respective ends of the pair of side wall portions, and
the fluid guide portion extends from at least one of the side wall portions.

5. The straddle type vehicle according to Claim 4,
wherein the fluid guide portion extends from a middle portion of the side wall portion.

6. The straddle type vehicle according to any one of the preceding Claims,
wherein a cross section of the holding portion along the longitudinal direction is concave, and
the holding portion includes:
a flexible core member made of metal; and
an elastic member that covers the core member.

7. The straddle type vehicle according to any one of the preceding Claims,
wherein the holding portion includes:
a pair of side wall portions that abut to respective surfaces of the plate-like edge portion; and
a bottom portion which continues from respective ends of the pair of side wall portions,
an inner wall surface of the side wall portions includes a corrugated portion that protrudes from the inner wall surface to a space through which the edge portion is inserted,
the corrugated portion is inclined in an inserting direction of the edge portion into the holding portion, and
a tip of the corrugated portion is positioned closer to the bottom portion than its base portion.

8. The straddle type vehicle according to any one of the preceding Claims, further comprising a fuel tank for storing fuel supplied to an engine that generates driving force of the straddle type vehicle,
wherein the fuel tank includes the edge portion, and
the guide member is mounted on the edge portion formed on the fuel tank.
